(19) Europäisches Patentamt

European Patent Office

Office européen des brevets

(11) **EP 2 541 653 B1**

(12) **EUROPEAN PATENT SPECIFICATION**

(45) Date of publication and mention of the grant of the patent:
**07.09.2016 Bulletin 2016/36**

(21) Application number: **11747322.3**

(22) Date of filing: **22.02.2011**

(51) Int Cl.:
*H01M 4/505* (2010.01)       *C01G 53/00* (2006.01)
*H01M 4/525* (2010.01)

(86) International application number:
**PCT/JP2011/053823**

(87) International publication number:
**WO 2011/105361 (01.09.2011 Gazette 2011/35)**

(54) **POSITIVE ELECTRODE ACTIVE MATERIAL PRECURSOR PARTICULATE POWDER AND POSITIVE ELECTRODE ACTIVE MATERIAL PARTICULATE POWDER, AND NON-AQUEOUS ELECTROLYTE SECONDARY BATTERY**

POSITIVELEKTRODEN-AKTIVMATERIAL, VORLÄUFERPARTIKELPULVER UND PARTIKELPULVER FÜR DAS POSITIVELEKTRODEN-AKTIVMATERIAL SOWIE SEKUNDÄRBATTERIE MIT NICHTWÄSSRIGEM ELEKTROLYT

POUDRE PARTICULAIRE POUR PRÉCURSEUR DE MATÉRIAU ACTIF D'ÉLECTRODE POSITIVE, POUDRE PARTICULAIRE POUR MATÉRIAU ACTIF D'ÉLECTRODE POSITIVE, ET BATTERIE SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2010 JP 2010037771**

(43) Date of publication of application:
**02.01.2013 Bulletin 2013/01**

(73) Proprietor: **Toda Kogyo Corporation**
**Hiroshima 739-0652 (JP)**

(72) Inventors:
• **YAMAMOTO, Manabu**
**Kitakyushu-shi**
**Fukuoka 808-0021 (JP)**
• **NISHIKAWA, Daisuke**
**Kitakyushu-shi**
**Fukuoka 808-0021 (JP)**
• **ISHIZAKI, Kazutoshi**
**Kitakyushu-shi**
**Fukuoka 808-0021 (JP)**

• **SASAKI, Osamu**
**Kitakyushu-shi**
**Fukuoka 808-0021 (JP)**
• **SADAMURA, Hideaki**
**Kitakyushu-shi**
**Fukuoka 808-0021 (JP)**

(74) Representative: **Woods, Geoffrey Corlett**
**J A Kemp**
**14 South Square**
**Gray's Inn**
**London WC1R 5JJ (GB)**

(56) References cited:
| | |
|---|---|
| WO-A1-2004/064180 | JP-A- 9 073 902 |
| JP-A- 9 245 787 | JP-A- 10 182 159 |
| JP-A- 10 294 099 | JP-A- 11 354 118 |
| JP-A- 2001 163 622 | JP-A- 2002 304 994 |
| JP-A- 2004 292 264 | JP-A- 2006 004 724 |
| JP-A- 2009 179 545 | |

**Description**

TECHNICAL FIELD

The present invention relates to excellent positive electrode (cathode) active substance particles for non-aqueous electrolyte secondary batteries which can exhibit a high discharge voltage and a large discharge capacity.

BACKGROUND ART

With the recent rapid development of portable and cordless electronic devices such as audio-visual (AV) devices and personal computers, there is an increasing demand for secondary batteries having a small size, a light weight and a high energy density as a power source for driving these electronic devices. Also, in consideration of global environments, electric cars and hybrid cars have been recently developed and put into practice, so that there is an increasing demand for lithium ion secondary batteries used in large size applications which have excellent storage characteristics. Under these circumstances, the high-energy lithium ion secondary batteries having advantages such as a high discharge voltage and a large discharge capacity have been noticed. In particular, in order to apply the lithium ion secondary batteries to electric tools, electric vehicles or the like in which rapid charge/discharge cycle characteristics are needed, it has been required that the lithium ion secondary batteries exhibit excellent rate characteristics.

Hitherto, as positive electrode active substances useful for lithium ion secondary batteries exhibiting a 4 V-grade voltage, there are generally known $LiMn_2O_4$ having a spinel type structure, $LiMnO_2$ having a zigzag layer structure, $LiCoO_2$ and $LiNiO_2$ having a layer rock-salt structure, or the like. Among the secondary batteries using these active substances, lithium ion secondary batteries using $LiNiO_2$ have been noticed because of a large discharge capacity thereof.

However, $LiNiO_2$ tends to exhibit a low discharge voltage and tends to be deteriorated in thermal stability upon charging as well as cycle characteristics and rate characteristics, and, therefore, it has been required to further improve properties thereof. In addition, when subjecting $LiNiO_2$ to high-voltage charging to obtain a high capacity, there tends to arise such a problem that the structure thereof is broken.

Also, $LiMnO_2$ is excellent in rate characteristics and cycle characteristics, but exhibit low discharge voltage and discharge capacity, and therefore tends to hardly provide a high-energy positive electrode active substance.

In recent years, the positive electrode active substances having a high discharge voltage have been noticed. Typical examples of the known positive electrode active substances having a high discharge voltage include $LiNi_{0.5}Mn_{1.5}O_4$, $LiCoMnO_4$, $Li_{1.2}Cr_{0.4}Mn_{0.4}O_4$, $Li_{1.2}Cr_{0.4}Ti_{0.4}O_4$, $LiCoPO_4$, $LiFeMnO_4$ and $LiNiVO_4$.

Among these materials, $LiNi_{0.5}Mn_{1.5}O_4$ has a high discharge voltage whose discharge plateau region is present in the range of not less than 4.5 V, and is excellent in rate characteristics and cycle characteristics. Therefore, the $LiNi_{0.5}Mn_{1.5}O_4$ has been especially noticed as a next generation positive electrode active substance (Patent Document 1).

There is very longtime a continuous demand for positive electrode active substances having a higher capacity. As to the positive electrode active substances used in the present invention, there is also the same demand as above.

In Patent Document 2, it has been attempted to improve properties of Li-Ni-Mn compounds by adding Sr, Y, Zr, Ru, Rh, Pd, Ba, Hf, Ta, W, etc., thereto.

In Patent Document 3, there is described such an attempt that a Ni-Mn solid solution having a higher uniformity is synthesized by using a nitrate upon synthesis of a precursor thereof and using a polymer as an ion carrier to thereby reduce an impurity phase other than the Ni-Mn spinel type structure therein.

WO 2004/064180 A1 describes a material for positive electrode of lithium secondary battery and process for producing the same.

However, the positive electrode active substances conventionally known in the art have still failed to exhibit a sufficiently high discharge capacity and therefore satisfy the requirement of reduction in size.

PRIOR ART DOCUMENTS

PATENT DOCUMENTS

Patent Document 1: Japanese Patent Application Laid-open (KOKAI) No. 9-147867
Patent Document 2: Japanese Patent Application Laid-open (KOKAI) No. 2005-322480
Patent Document 3: Japanese Patent Application Laid-open (KOKAI) No. 2001-185148

## SUMMARY OF THE INVENTION

### PROBLEM TO BE SOLVED BY THE INVENTION

At present, it has been strongly required to provide a high-energy positive electrode active substance for non-aqueous electrolyte secondary batteries which has a high discharge voltage and is excellent in discharge capacity. However, the positive electrode active substance capable of fully satisfying the above requirements has not been obtained until now.

In consequence, an object of the present invention is to provide positive electrode active substance particles for non-aqueous electrolyte secondary batteries which have a high discharge voltage and are excellent in charge capacity and discharge capacity, and a non-aqueous electrolyte secondary battery comprising a positive electrode comprising the positive electrode active substance particles.

### MEANS FOR FOLVING THE PROBLEM

According to the present invention, there are provided positive electrode active substance particles comprising a compound having a spinel type structure comprising at least Li, Ni and Mn, and wherein a molar ratio of Li/(Ni + Mn) therein is 0.3 to 0.65, the Ni content is 5 to 25% by weight, the Na content is 0.05 to 1.9% by weight and the S content is 0.0005 to 0.16% by weight, and the sum of the Na content and the S content is 0.09 to 1.9005% by weight (Invention 1).

Also, according to the present invention, there are provided positive electrode active substance particles as described in the above Invention 1, wherein the compound having a spinel type structure is represented by the formula: $LiNi_xMn_{2-x}O_4$ wherein x is in the range of 0.2 to 0.92 ($0.2 \leq x \leq 0.92$) (Invention 2).

Also, according to the present invention, there are provided positive electrode active substance particles as described in the above Inventions 1 or 2, wherein the positive electrode active substance particles have a specific surface area of 0.05 to 20 $m^2/g$ as measured by a BET method (Invention 3).

Also, according to the present invention, there are provided positive electrode active substance particles as described in any of the above Inventions 1 to 3, wherein the positive electrode active substance particles comprise secondary particles in the form of aggregated primary particles which have an average secondary particle diameter of 1 to 50 $\mu$m (Invention 4).

Also, according to the present invention, there are provided positive electrode active substance particles as described in any of the above Inventions 1 to 4, wherein the particle size distribution of the secondary particles is such that D10%/D50% is 0.1 to 1.0 and D90%/D50% is 1.0 to 2.8 (Invention 5).

Also, according to the present invention, there are provided positive electrode active substance particles as described in any of the above Inventions 1 to 5, wherein the average primary particle diameter of the positive electrode acid substance particles is not more than 10 $\mu$m (Invention 6).

Further, according to the present invention, there are provided precursor particles comprising, as a main component, a composite carbonate comprising at least Ni and Mn and having an Ni content of 3 to 18% by weight, an Na content of 0.05 to 1.5% by weight and an S content of 0.0005 to 0.12% by weight, a sum of the Na content and the S content being 0.07 to 1.6% by weight (Invention 7).

Also, according to the present invention, there are provided precursor particles as described in the above Invention 7, wherein the composite carbonate is represented by the formula: $Ni_xMn_{1-x}CO_3$ wherein x is in the range of 0.1 to 0.46 ($0.1 \leq x \leq 0.46$) (Invention 8).

Also, according to the present invention, there are provided precursor particles as described in either of the above Inventions 7 or 8, wherein the particle size distribution of the secondary particles of the precursor particles is such that D10%/D50% is 0.1 to 1.0 and D90%/D50% is 1.0 to 2.8 (Invention 9).

Also, according to the present invention, there are provided precursor particles as described in any of the above Inventions 7 to 9, wherein the average particle diameter of the particles is 1 to 50 $\mu$m and wherein the particles have a BET specific surface area of 3 to 150 $m^2/g$ (Invention 10).

Also, according to the present invention, there are provided positive electrode active substance particles as described in any of the above Inventions 1 to 6 which are obtainable by mixing precursor particles as described in any of the above Inventions 7 to 10 with a lithium compound, and then calcining the resulting mixture in a temperature range of 500 to 1300°C (Invention 11).

Further, according to the present invention, there is provided a positive electrode which comprises positive electrode active substance particles as described in any of the above Inventions 1 to 6 or 11, a conducting agent and a binder (Invention 12).

Further, according to the present invention, there is provided a non-aqueous electrolyte secondary battery comprising a positive electrode comprising the positive electrode active substance particles as described in any of the above Inventions 1 to 6 or 11 (Invention 13).

Further, according to the present invention, there is provided use of the positive electrode active substance particles as described in any of the above Inventions 1 to 6 or 11 in a non-aqueous electrolyte secondary battery (Invention 14).

EFFECT OF THE INVENTION

The positive electrode active substance particles according to the present invention can exhibit a high discharge voltage and a large discharge capacity and therefore can be suitably used as positive electrode active substance particles for non-aqueous secondary batteries.

BRIEF DESCRIPTION OF THE DRAWINGS

FIG. 1 is an X-ray diffraction diagram of positive electrode active substance particles obtained in Example 17.
FIG. 2 is an X-ray diffraction diagram of positive electrode active substance particles obtained in Comparative Example 17.
FIG. 3 is a high-magnification SEM image of precursor particles obtained in Example 1.
FIG. 4 is a low-magnification SEM image of precursor particles obtained in Example 1.
FIG. 5 is a high-magnification SEM image of positive electrode active substance particles obtained in Example 19.
FIG. 6 is a low-magnification SEM image of positive electrode active substance particles obtained in Example 19.
FIG. 7 is a discharge characteristic curve of a secondary battery produced by using the positive electrode active substance particles obtained in Example 17.

PREFERRED EMBODIMENTS FOR CARRYING OUT THE INVENTION

The construction of the present invention is described in more detail below.
The precursor particles used for producing positive electrode active substance particles for non-aqueous electrolyte secondary batteries according to the present invention (hereinafter referred to merely as "precursor particles") comprise a composite carbonate comprising at least Ni and Mn as a main component.
The precursor particles according to the present invention are used as a precursor of positive electrode active substance particles having a spinel type structure which is a compound comprising Li, Ni and Mn.
The composite carbonate is preferably represented by the formula: $Ni_xMn_{1-x}CO_3$ wherein x is in the range of 0.1 to 0.46 ($0.1 \leq x \leq 0.46$) into which a generally known additive element such as Mg, Ca, Al, Co, Fe, Cr, Mo, W, Zr, Bi, B, Nd, La, Sb, Ti, V, Sr, Y, Ba, Nb and Ce may be introduced. The total content of the above additive elements to be introduced into the composite carbonate is preferably not more than 15% by weight based on the composite carbonate.
The precursor particles according to the present invention have an Ni content of 3 to 18% by weight, preferably 7 to 15% by weight, more preferably 9 to 15% by weight and still more preferably 11 to 14% by weight. When the Ni content in the precursor particles is less than 3% by weight, the discharge plateau region of not less than 4.5 V in the positive electrode active substance particles obtained from the above precursor tends to become excessively small. Whereas, when the Ni content in the precursor particles is more than 18% by weight, a large amount of an impurity phase other than the spinel type structure such as nickel oxide tends to be produced in the positive electrode active substance particles obtained from the above precursor, resulting in deterioration in discharge capacity thereof.
The precursor particles according to the present invention have an Na content of 0.05 to 1.5% by weight. The Na content of the precursor particles is preferably 0.1 to 0.8% by weight, more preferably 0.2 to 0.7% by weight and still more preferably 0.3 to 0.6% by weight. When the Na content of the precursor particles is less than 0.05% by weight, the positive electrode active substance particles obtained from the above precursor tend to be poor in ability of keeping their spinel type structure. When the Na content of the precursor particles is more than 1.5% by weight, migration of lithium in the positive electrode active substance particles obtained from the above precursor tends to be inhibited, so that the obtained positive electrode active substance particles tend to be deteriorated in discharge capacity.
The precursor particles according to the present invention have an S content of 0.0005 to 0.12% by weight. The S content of the precursor particles is preferably 0.0005 to 0.11% by weight, more preferably 0.0005 to 0.09% by weight and still more preferably 0.0005 to 0.05% by weight. When the S content of the precursor particles is less than 0.0005% by weight, sulfur (S) may fail to have a suitable electric effect on migration of lithium in the positive electrode active substance particles obtained from the above precursor. When the S content of the precursor particles is more than 0.12% by weight, migration of lithium in the positive electrode active substance particles obtained from the above precursor tends to be inhibited, so that the obtained positive electrode active substance particles tend to be deteriorated in discharge capacity.

In the precursor particles according to the present invention, the sum of the Na content and the S content is 0.07 to 1.6% by weight, preferably 0.1 to 0.9% by weight, more preferably 0.2 to 0.75% by weight and still more preferably 0.3 to 0.65% by weight. When the sum of the Na content and the S content is out of the above-specified range, the positive electrode active substance particles obtained from the above precursor tend to be deteriorated in discharge capacity.

The secondary particles of the precursor particles according to the present invention preferably have a spherical shape or a granular shape.

The particle size distribution of the secondary particles of the precursor particles according to the present invention is preferably controlled to D10%/D50% of 0.1 to 1.0 and D90%/D50% of 1.0 to 2.8, more preferably D10%/D50% of 0.2 to 1.0 and D90%/D50% of 1.2 to 2.5, and still more preferably D10%/D50% of 0.4 to 0.8 and D90%/D50% of 1.4 to 1.7.

The above indices of the particle size distribution as used herein are defined based on the following formulae. As the respective values are closer to 1, the particle size distribution of the precursor particles becomes narrower.

$$\mathtt{D10\% / D50\% = (D10\%) \div (D50\%)}$$

$$\mathtt{D90\% / D50\% = (D90\%) \div (D50\%)}$$

The precursor particles according to the present invention preferably have an average particle diameter of 1 to 50 $\mu$m and a BET specific surface area of 3 to 150 $m^2/g$.

The positive electrode active substance particles according to the present invention comprise a compound having a spinel type structure comprising at least Li, Ni and Mn.

The compound having a spinel type structure is preferably represented by the formula: $LiNi_xMn_{2-x}O_4$ wherein x is in the range of 0.2 to 0.92 ($0.2 \leq x \leq 0.92$) into which a generally known additive element such as Mg, Ca, Al, Co, Fe, Cr, Mo, W, Zr, Bi, B, Nd, La, Sb, Ti, V, Sr, Y, Ba, Nb and Ce may be introduced. The content of the above additive elements in the compound is preferably not more than 18.5% by weight based on the compound having a spinel type structure. The positive electrode active substance particles according to the present invention which have such a spinel type structure can be subjected charging and discharging cycles without breakage of the structure even when charged with a voltage as high as 5 V.

The positive electrode active substance particles according to the present invention have an Ni content of 5 to 25% by weight, preferably 10 to 20% by weight, more preferably 12 to 19% by weight and still more preferably 15 to 18% by weight. When the Ni content in the positive electrode active substance particles is less than the above-specified range, the discharge plateau region of not less than 4.5 V in the positive electrode active substance particles tends to become excessively small. Whereas, when the Ni content in the positive electrode active substance particles is more than 25% by weight, a large amount of an impurity phase other than the spinel type structure such as nickel oxide tends to be produced, resulting in deterioration in discharge capacity thereof.

The positive electrode active substance particles according to the present invention have an Na content of 0.05 to 1.9% by weight. The Na content in the positive electrode active substance particles is preferably 0.2 to 1.2% by weight, more preferably 0.3 to 1.0% by weight and still more preferably 0.3 to 0.8% by weight. When the Na content in the positive electrode active substance particles is less than 0.05% by weight, the positive electrode active substance particles tend to be poor in ability of keeping their spinel type structure. When the Na content in the positive electrode active substance particles is more than 1.9% by weight, migration of lithium in the positive electrode active substance particles tends to be inhibited, so that the resulting positive electrode active substance particles tend to be deteriorated in discharge capacity.

The positive electrode active substance particles according to the present invention have an S content of 0.0005 to 0.16% by weight. The S content in the positive electrode active substance particles is preferably 0.0005 to 0.14% by weight, more preferably 0.0005 to 0.12% by weight and still more preferably 0.0005 to 0.07% by weight. When the S content in the positive electrode active substance particles is less than 0.0005% by weight, sulfur (S) may fail to give an electric effect on migration of lithium in the positive electrode active substance particles. When the S content in the positive electrode active substance particles is more than 0.16% by weight, migration of lithium in the positive electrode active substance particles tends to be inhibited, so that the resulting positive electrode active substance particles tend to be deteriorated in discharge capacity.

In the positive electrode active substance particles according to the present invention, the sum of the Na content and the S content is 0.09 to 1.9005% by weight, preferably 0.2 to 1.2% by weight, more preferably 0.3 to 1.1% by weight and still more preferably 0.4 to 0.86% by weight. When the sum of the Na content and the S content is out of the above-specified range, the positive electrode active substance particles tend to be deteriorated in discharge capacity.

The shape and size of secondary particles of the positive electrode active substance particles according to the present invention substantially reflect the shape and size of secondary particles of the precursor of the present invention. The positive electrode active substance particles according to the present invention preferably have a spherical shape or a granular shape.

The particle size distribution of the secondary particles of the positive electrode active substance particles according to the present invention is preferably controlled to D10%/D50% of 0.1 to 1.0 and D90%/D50% of 1.0 to 2.8, more preferably D10%/D50% of 0.2 to 1.0 and D90%/D50% of 1.2 to 2.5, and still more preferably D10%/D50% of 0.4 to 0.8 and D90%/D50% of 1.4 to 1.7.

In the positive electrode active substance particles according to the present invention, the molar ratio of Li/(Ni + Mn) therein is in the range of 0.3 to 0.65. When the molar ratio of Li/(Ni + Mn) is less than 0.3, the resulting positive electrode active substance particles tend to be deteriorated in charge capacity owing to a less amount of lithium therein contributing to charging. When the molar ratio of Li/(Ni + Mn) is more than 0.65, migration of lithium in the resulting positive electrode active substance particles tend to be inhibited contrarily owing to an excessively large amount of lithium therein, resulting in deteriorated discharge capacity. The molar ratio of Li/(Ni + Mn) in the positive electrode active substance particles is preferably 0.35 to 0.55, more preferably 0.4 to 0.55 and still more preferably 0.45 to 0.55.

The specific surface area of the positive electrode active substance particles according to the present invention as measured by a BET method is preferably 0.05 to 20 $m^2$/g, more preferably 0.1 to 15 $m^2$/g, still more preferably 0.1 to 10 $m^2$/g and further still more preferably 0.2 to 5 $m^2$/g. When the specific surface area of the positive electrode active substance particles is excessively small, the contact area between the positive electrode active substance particles and an electrolyte solution tends to be excessively small, so that the positive electrode active substance particles tend to be deteriorated in discharge capacity. When the specific surface area of the positive electrode active substance particles is excessively large, the reaction between the positive electrode active substance particles and the electrolyte solution tends to become excessive, so that the positive electrode active substance particles also tend to be deteriorated in discharge capacity.

The positive electrode active substance particles according to the present invention comprise secondary particles formed by aggregating primary particles thereof. The average primary particle diameter of the positive electrode active substance particles is preferably not more than 10 $\mu$m, more preferably 0.01 to 5 $\mu$m and still more preferably 0.02 to 3 $\mu$m.

The average secondary particle diameter (D50%) of the positive electrode active substance particles according to the present invention is preferably 1 to 50 $\mu$m. When the average secondary particle diameter (D50%) of the positive electrode active substance particles is less than 1 $\mu$m, the resulting positive electrode active substance particles tend to exhibit an excessively high reactivity with the electrolyte solution owing to excessive increase in contact area with the electrolyte solution, and therefore tend to be deteriorated in stability upon charging. When the average secondary particle diameter of the positive electrode active substance particles is more than 50 $\mu$m, the resulting electrode tends to exhibit an increased internal resistance, and therefore there is a possibility that the electrode is deteriorated in charge/discharge rate characteristics. The average secondary particle diameter (D50%) of the positive electrode active substance particles is more preferably 1 to 30 $\mu$m, still more preferably 2 to 25 $\mu$m and further still more preferably 5 to 25 $\mu$m.

Next, the processes for producing the precursor particles and the positive electrode active substance particles according to the present invention are described.

The precursor particles according to the present invention may be produced by supplying a mixed solution comprising a nickel salt and a manganese salt at desired concentrations as well as an alkali aqueous solution or a basic slurry into a reaction vessel, controlling a pH value of the resulting suspension to 7.5 to 13, circulating the overflowed suspension through a concentration vessel connected to an overflow pipe into the reaction vessel while controlling a concentration velocity of the suspension in the concentration vessel, and then conducting the reaction until a concentration of the precursor particles in the suspension in the reaction vessel and the precipitation vessel reaches 0.2 to 15 mol/L.

The nickel salt and the manganese salt used upon synthesis of the precursor according to the present invention is not particularly limited, and various nickel salts and manganese salts may be used in the present invention. Examples of the nickel salt and the manganese salt usable in the present invention include sulfates, chlorides, nitrates, acetates, etc., of nickel and manganese.

The alkali aqueous solution or the basic slurry used upon synthesis of the precursor according to the present invention is not particularly limited, and various basic raw materials may be used in the present invention. Examples of the alkali aqueous solution or the basic slurry usable in the present invention include aqueous solutions of sodium carbonate, sodium hydroxide, lithium hydroxide, potassium carbonate, potassium hydroxide, ammonia, etc., and a slurry of lithium carbonate.

Also, upon synthesis of the precursor according to the present invention, a nitrate, a sulfate, a chloride, etc., of Mg, Ca, Al, Co, Fe, Cr, Mo, W, Zr, Bi, B, Nd, La, Sb, Ti, V, Sr, Y, Ba, Nb and Ce may be added to a mixed solution of the raw materials to introduce these additive elements into the precursor particles.

The slurry of the precursor particles obtained in the above reaction is then subjected to filtration and water-washing. At this time, in the case where the Na content and the S content of the precursor are respectively larger than the predetermined ranges, the slurry of the precursor particles is washed with an alkali and an acid, and thereafter with pure water so as to control amounts of Na and S in the precursor to the respective predetermined ranges. The order of the alkali-washing and the acid-washing is not particularly limited.

The alkali used for the water-washing is not particularly limited, and various alkali aqueous solutions may be used in the present invention. Examples of the alkali aqueous solutions include aqueous solutions of sodium hydroxide, potassium hydroxide, sodium carbonate, ammonia, etc. Among these alkali aqueous solutions, an aqueous solution of sodium hydroxide is preferred. The pH value of the alkali aqueous solutions is preferably 8.5 to 11.5 and more preferably 9 to 11.

The acid used for the water-washing is not particularly limited, and various acid solutions may be used in the present invention. Examples of the acid include acid solutions of sulfuric acid, nitric acid, hydrochloric acid, acetic acid, etc. Among these acid solutions, sulfuric acid is preferred. The pH value of the acid solutions is preferably 3 to 5.5 and more preferably 4 to 5.

After completion of the water-washing, the resulting precursor particles may be subjected to drying and pulverization.

In addition, in the case where the Na content and/or the S content of the precursor are smaller than the respective predetermined ranges, after subjecting a slurry of the precursor to water-washing and drying, an Na- or S-containing raw material such as sodium nitrate, sodium sulfate and manganese sulfate is added thereto so as to compensate deficient Na and S and control amounts of Na and S in the precursor to the respective predetermined ranges.

The precursor particles according to the present invention comprise at least a carbonate, and may also simultaneously comprise an oxide or a hydroxide together with the carbonate.

The positive electrode active substance particles according to the present invention may be produced by mixing previously prepared precursor particles with a lithium compound, and then calcining the resulting mixture in a temperature range of 500 to 1300°C.

The lithium compound used in the present invention is not particularly limited, and various lithium salts may be used in the present invention. Examples of the lithium compound include lithium hydroxide monohydrate, lithium nitrate, lithium carbonate, lithium acetate, lithium bromide, lithium chloride, lithium citrate, lithium fluoride, lithium iodide, lithium lactate, lithium oxalate, lithium phosphate, lithium pyruvate, lithium sulfate and lithium oxide. Among these lithium compounds, preferred is lithium carbonate. The amount of the lithium compound to be compounded in the precursor particles may be 10 to 100% by weight based on the weight of the precursor particles.

The lithium compound used in the present invention preferably has an average particle diameter of not more than 50 $\mu$m and more preferably not more than 30 $\mu$m. When the average particle diameter of the lithium compound is more than 50 $\mu$m, the lithium compound tends to be hardly uniformly mixed with the precursor particles, so that it may be difficult to obtain composite oxide particles having a good crystallinity.

Also, upon synthesis of the positive electrode active substance particles according to the present invention, a nitrate, an oxide, a hydroxide, a carbonate, etc., of Mg, Ca, Al, Co, Fe, Cr, Mo, W, Zr, Bi, B, Nd, La, Sb, Ti, V, Sr, Y, Ba, Nb and Ce may be mixed together with the precursor particles and the lithium compound to introduce these additive elements into the positive electrode active substance particles.

The mixing treatment of the precursor particles and the lithium compound may be conducted by either a dry method or a wet method as long as they may be uniformly mixed with each other.

The calcination temperature is preferably 500 to 1300°C. When the calcination temperature is less than 500°C, the reaction of Li with Ni and Mn may fail to proceed sufficiently, so that these elements tend to be hardly formed into a composite material thereof. When the calcination temperature is more than 1300°C, sintering tends to excessively proceed. The calcination temperature is more preferably in the range of 700 to 1200°C and still more preferably 800 to 1100°C. Meanwhile, when lithium carbonate is used as the lithium compound, the calcination temperature is preferably 800 to 1300°C. In addition, in the present invention, the calcination procedure may be carried out twice in the above-specified temperature range. The atmosphere upon the calcination is preferably an oxidative gas atmosphere, and more preferably ordinary atmospheric air or an oxygen atmosphere. The calcination time is preferably 2 to 50 hr.

Next, the positive electrode comprising the positive electrode active substance particles according to the present invention is described.

When producing the positive electrode comprising the positive electrode active substance particles according to the present invention, a conducting agent and a binder are added to and mixed with the positive electrode active substance particles by an ordinary method. Examples of the preferred conducting agent include acetylene black, carbon black and graphite. Examples of the preferred binder include polytetrafluoroethylene and polyvinylidene fluoride.

The secondary battery produced by using the positive electrode comprising the positive electrode active substance particles according to the present invention comprises the above positive electrode, a negative electrode and an electrolyte.

Examples of a negative electrode active substance which may be used for production of the negative electrode include metallic lithium, lithium/aluminum alloys, lithium/tin alloys, and graphite or black lead.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving lithium phosphate hexafluoride as well as at least one lithium salt selected from the group consisting of lithium perchlorate and lithium borate tetrafluoride in the above solvent.

The secondary battery produced by using the positive electrode comprising the positive electrode active substance particles according to the present invention has an initial discharge capacity of not less than 115 mAh/g as measured by the below-mentioned evaluation method. The initial discharge capacity of the secondary battery is preferably as high as possible.

<u><Function></u>

It is considered by the present inventors that in the present invention, Na and S are present within the positive electrode active substance particles or on the surface thereof and give an influence on reactivity of lithium ions to thereby enhance a discharge capacity thereof.

More specifically, it is considered by the present inventors that the Na being present in the positive electrode active substance particles gives any electrical influence upon charging and discharging, or has any function as a support for keeping the spinel type structure. However, when the content of Na in the particles is excessively large, migration of the lithium ions tends to be inhibited, so that the positive electrode active substance particles tend to be deteriorated in discharge capacity.

Also, it is considered by the present inventors that the S being present in the positive electrode active substance particles gives any electrical influence upon charging and discharging. However, when the content of S in the particles is excessively large, migration of the lithium ions tends to be inhibited, so that the positive electrode active substance particles tend to be deteriorated in discharge capacity.

Therefore, by controlling the respective contents of Na and S to the predetermined ranges, it is possible to produce the positive electrode active substance particles for non-aqueous electrolyte secondary batteries which exhibit a high discharge voltage and are excellent in charge capacity and discharge capacity.

Further, it is considered by the present inventors that the particles having a particle shape closer to a spherical shape or a narrower particle size distribution are likely to maintain a uniformity thereof, so that there occur less segregation of the particles which inhibits a uniform reactivity of the lithium ions, resulting in further increased discharge capacity.

<u>EXAMPLES</u>

Next, the present invention is described in more detail by the following Examples. The following Examples are only illustrative and are not intended to limit the present invention thereto. Meanwhile, in the following descriptions, Examples 1 to 16 and Comparative Examples 1 to 9 relate to various examples concerning precursor particles, whereas Examples 17 to 32 and Comparative Examples 10 to 17 relate to various examples concerning positive electrode active substance particles and non-aqueous electrolyte secondary batteries using the positive electrode active substance particles. The evaluation methods used in the following Examples and Comparative Examples are as follows.

The BET specific surface area was measured by a BET method using nitrogen.

The contents of elements constituting the positive electrode active substance particles such as sodium, lithium, nickel, cobalt, manganese, aluminum and titanium were determined as follow. That is, the positive electrode active substance particles were dissolved in an acid, and the resulting solution was analyzed by a plasma emission spectroscopic device "ICPS-7500" (manufactured by Shimadzu Seisakusho Co., Ltd.).

The identification of a constitutional phase and the measurement of intensity were carried out by X-ray diffraction analysis. The X-ray diffraction analysis was conducted using an X-ray diffractometer "RINT-2000" manufactured by Rigaku Co., Ltd., (tube: Cu; tube voltage: 40 kV; tube current: 40 mA; step angle: 0.020°; count time: 0.6 s; divergence slit: 1°; scattering slit: 1°; light-receiving slit: 0.30 mm).

The shape of the particles was observed and determined using a scanning electron microscope "SEM-EDX" equipped with an energy disperse type X-ray analyzer (manufactured by Hitachi High-Technologies Corp.).

The average secondary particle diameter and the particle size distribution of the particles were measured by a pure water wet method using "SEISHIN LASER MICRON SIZER LMS-30" manufactured by Seishin Kigyo Co., Ltd. Also, the particle size distribution was calculated on the basis of volume of the particles.

The S content was measured using "HORIBA CARBON/SULFUR ANALYZER EMIA-320V" (manufactured by HORIBA Scientific).

The coin cell produced by using the positive electrode active substance particles was evaluated for charge/discharge characteristics and cycle characteristics.

First, 85% by weight of composite oxide as a positive electrode active substance, 10% by weight of acetylene black as a conducting material, and 5% by weight of polyvinylidene fluoride dissolved in N-methyl pyrrolidone as a binder, were mixed with each other, and the resulting mixture was applied onto an Al metal foil and then dried at 150°C. The thus obtained sheets were blanked into 16 mmφ and then compression-bonded to each other under a pressure of 1 t/cm$^2$, thereby producing an electrode having a thickness of 50 $\mu$m and using the thus produced electrode as a positive electrode. A metallic lithium blanked into 16 mmφ was used as a negative electrode, and a solution prepared by mixing EC and DMC with each other at a volume ratio of 1:2 in which 1 mol/L of LiPF$_6$ was dissolved, was used as an electrolyte solution, thereby producing a coin cell of a CR2032 type.

The initial charge/discharge cycle of the coin cell was conducted as follows. That is, at a temperature of 25°C, the coin cell was subjected to constant current charging at 0.1C until reaching 5.0 V and then to constant current discharging at 0.1C until reaching 2.0 V. The second and subsequent charge/discharge cycles were conducted in the same manner as defined in the above initial charge/discharge cycle.

Example 1:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

As a result of subjecting the resulting precursor particles to ICP analysis, it was confirmed that the molar ratio of Ni: Mn was 24.4:75.6; the Ni content was 12.2% by weight; the Na content was 0.5113% by weight; the S content was 0.0211% by weight; and the sum of the Na content and the S content was 0.5324% by weight.

As a result of measuring the particle size distribution of the above precursor particles using "SEISHIN LASER MICRON SIZER LMS-30", it was confirmed that D10% was 11.0 ($\mu$m); D50% was 16.8 ($\mu$m); D90% was 24.8 ($\mu$m); D10%/D50% was 0.65; and D90%/D50% was 1.48.

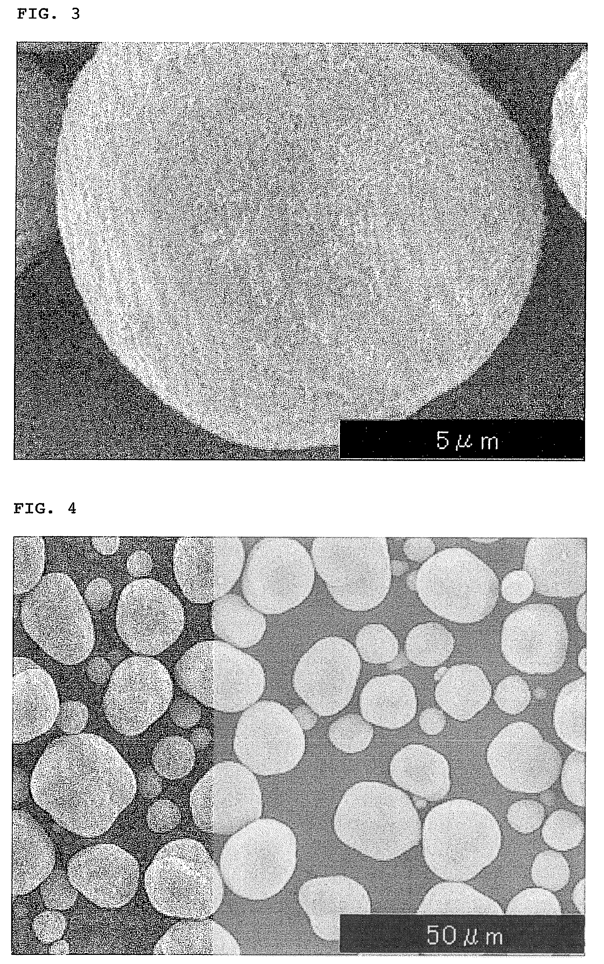

Further, as a result of observing the precursor particles using a scanning electron microscope (SEM), it was confirmed that most of secondary particles of the precursor particles had a substantially spherical shape or a granular shape. The observation results are shown in FIGS. 3 and 4.

The results of analyses are shown in Table 1.

Example 2:

A sealed type reaction vessel was charged with 14 L of water and sealed therearound except for a raw material feed port so as to prevent entrance of outside air thereinto, and an inside of the reaction vessel was maintained at 50°C. Further, a 1.5 M Ni sulfate/Mn sulfate mixed aqueous solution and a 0.8 M sodium carbonate aqueous solution were successively added into the reaction vessel while strongly stirring such that the pH value of the resulting solution was adjusted to 8.5 ($\pm$0.2). During the reaction, a filtrate only was discharged out of the reaction system using a concentration device, whereas a solid component separated from the filtrate was retained in the reaction vessel. After the reaction was continued for 20 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Example 3:

A sealed type reaction vessel was charged with 14 L of water, and an inside of the reaction vessel was maintained at 60°C while flowing air therethrough. Further, a 1.5 M Ni sulfate/Mn sulfate mixed aqueous solution, a 0.8 M sodium carbonate aqueous solution and a 5 M ammonia aqueous solution were successively added into the reaction vessel while strongly stirring such that the pH value of the resulting solution was adjusted to 8.1 (±0.2). During the reaction, a filtrate only was discharged out of the reaction system using a concentration device, whereas a solid component separated from the filtrate was retained in the reaction vessel. After the reaction was continued for 50 hr, a slurry comprising a co-precipitated product was obtained. The thus obtained slurry was filtered, and the resulting solid was water-washed with dilute sulfuric acid having a pH value of 5, and successively with sodium hydroxide having a pH value of 10 and further with pure water, and then dried at 120°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Example 4:

A sealed type reaction vessel was charged with 14 L of water, and an inside of the reaction vessel was maintained at 40°C while flowing a nitrogen gas therethrough. Further, a 1.5 M Ni sulfate/Mn sulfate mixed aqueous solution and a 0.8 M sodium carbonate aqueous solution were successively added into the reaction vessel while strongly stirring such that the pH value of the resulting solution was adjusted to 8.4 (±0.2). During the reaction, a filtrate only was discharged out of the reaction system using a concentration device, whereas a solid component separated from the filtrate was retained in the reaction vessel. After the reaction was continued for 20 hr, a slurry comprising a co-precipitated product was obtained. The thus obtained slurry was filtered, and the resulting solid was water-washed with dilute sulfuric acid having a pH value of 4, and successively with sodium hydroxide having a pH value of 9.5 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Example 5:

A sealed type reaction vessel was charged with 14 L of water, and an inside of the reaction vessel was maintained at 70°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.1 (±0.2). During the reaction, a filtrate only was discharged out of the reaction system using a concentration device, whereas a solid component separated from the filtrate was retained in the reaction vessel. After the reaction was continued for 60 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 110°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Example 6:

A sealed type reaction vessel was charged with 14 L of water, and an inside of the reaction vessel was maintained at 30°C while flowing a nitrogen gas therethrough. Further, a 1.5 M Ni sulfate/Mn sulfate mixed aqueous solution and a 0.8 M sodium carbonate aqueous solution were successively added into the reaction vessel while strongly stirring such that the pH value of the resulting solution was adjusted to 8.9 (±0.1). During the reaction, a filtrate only was discharged out of the reaction system using a concentration device, whereas a solid component separated from the filtrate was retained in the reaction vessel. After the reaction was continued for 10 hr, a slurry comprising a co-precipitated product was obtained. The thus obtained slurry was filtered, and the resulting solid was water-washed with dilute sulfuric acid having a pH value of 4, and successively with sodium hydroxide having a pH value of 9.5 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Example 7:

A sealed type reaction vessel was charged with 14 L of water, and an inside of the reaction vessel was maintained at 90°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.1 (±0.2). During the reaction, a filtrate only was discharged out of the reaction system using a concentration device, whereas a solid component separated from the filtrate was retained in the reaction vessel. After the reaction was continued for 90 hr, a slurry comprising a co-precipitated product was obtained. The thus obtained slurry was filtered, and the resulting solid was water-washed with sodium hydroxide having a pH value of 9, and successively with dilute sulfuric acid having a pH value of 5 and further with pure water, and then dried at 110°C overnight, thereby obtaining precursor particles.
As a result of subjecting the resulting precursor particles to X-ray diffraction analysis, it was confirmed that the precursor particles comprised a carbonate as a main component.
The results of the other analyses are shown in Table 1.

Example 8:

A sealed type reaction vessel was charged with 14 L of water, and an inside of the reaction vessel was maintained at 30°C while flowing a nitrogen gas therethrough. Further, a 1.5 M Ni sulfate/Mn sulfate mixed aqueous solution and a 0.8 M sodium carbonate aqueous solution were successively added into the reaction vessel while strongly stirring such that the pH value of the resulting solution was adjusted to 8.9 (±0.1). During the reaction, a filtrate only was discharged out of the reaction system using a concentration device, whereas a solid component separated from the filtrate was retained in the reaction vessel. After the reaction was continued for 10 hr, a slurry comprising a co-precipitated product was obtained. The thus obtained slurry was filtered, and the resulting solid was water-washed with dilute sulfuric acid having a pH value of 3, and successively with sodium hydroxide having a pH value of 11 and further with pure water, and then dried at 105°C overnight, thereby obtaining precursor particles.
As a result of subjecting the resulting precursor particles to X-ray diffraction analysis, it was confirmed that the precursor particles comprised a carbonate as a main component.
The results of the other analyses are shown in Table 1.

Example 9:

A sealed type reaction vessel was charged with 14 L of water, and an inside of the reaction vessel was maintained at 90°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.1 (±0.2). During the reaction, a filtrate only was discharged out of the reaction system using a concentration device, whereas a solid component separated from the filtrate was retained in the reaction vessel. After the reaction was continued for 90 hr, a slurry comprising a co-precipitated product was obtained. The thus obtained slurry was classified using a cyclone classifier, thereby obtaining a slurry comprising large diameter-side particles. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.
As a result of subjecting the resulting precursor particles to X-ray diffraction analysis, it was confirmed that the precursor particles comprised a carbonate as a main component.
The results of the other analyses are shown in Table 1.

Example 10:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 (±0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.
As a result of subjecting the resulting precursor particles to X-ray diffraction analysis, it was confirmed that the precursor particles comprised a carbonate as a main component.

The results of the other analyses are shown in Table 1.

Example 11:

A sealed type reaction vessel was charged with 14 L of water, and an inside of the reaction vessel was maintained at 50°C while flowing a nitrogen gas therethrough. Further, a 1.2 M Ni sulfate/Mn sulfate/Ti sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

As a result of ICP analysis, it was confirmed that the molar ratio of Ni:Mn:Ti in the precursor particles was 23.8:74.2:2.0.

The results of the other analyses are shown in Table 1.

Example 12:

A sealed type reaction vessel was charged with 14 L of water, and an inside of the reaction vessel was maintained at 50°C while flowing a nitrogen gas therethrough. Further, a 1.5 M Ni sulfate/Mn sulfate/Co sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

As a result of ICP analysis, it was confirmed that the molar ratio of Ni:Mn:Co in the precursor particles was 24.8:63.2:12.0.

The results of the other analyses are shown in Table 1.

Example 13:

A sealed type reaction vessel was charged with 14 L of water, and an inside of the reaction vessel was maintained at 40°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while weakly stirring such that the pH value of the resulting solution was adjusted to 8.6 ($\pm$0.1). During the reaction, a filtrate only was discharged out of the reaction system using a concentration device, whereas a solid component separated from the filtrate was retained in the reaction vessel. After the reaction was continued for 20 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Example 14:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution, a 2 M ammonia aqueous solution and a 4 M sodium hydroxide aqueous solution were successively added into the reaction vessel while strongly stirring such that the pH value of the resulting solution was adjusted to 9.3 ($\pm$0.2). During the reaction, a filtrate only was discharged out of the reaction system using a concentration device, whereas a solid component separated from the filtrate was retained in the reaction vessel. After the reaction was continued for 20 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Example 15:

A sealed type reaction vessel was charged with 14 L of water, and an inside of the reaction vessel was maintained at 30°C while flowing a nitrogen gas therethrough. Further, a 1.5 M Ni sulfate/Mn sulfate mixed aqueous solution, a 0.8 M sodium carbonate aqueous solution, a 2 M ammonia aqueous solution and a 4 M sodium hydroxide aqueous solution were successively added into the reaction vessel while weakly stirring such that the pH value of the resulting solution was adjusted to 9.8 ($\pm$0.1). During the reaction, a filtrate only was discharged out of the reaction system using a concentration device, whereas a solid component separated from the filtrate was retained in the reaction vessel. After the reaction was continued for 20 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate and a hydroxide as main components.

The results of the other analyses are shown in Table 1.

Comparative Example 1:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.0 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with pure water, and then dried at 120°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Comparative Example 2:

A sealed type reaction vessel was charged with 14 L of water, and an inside of the reaction vessel was maintained at 40°C while flowing a nitrogen gas therethrough. Further, a 1.5 M Ni sulfate/Mn sulfate mixed aqueous solution and a 0.8 M sodium carbonate aqueous solution were successively added into the reaction vessel while strongly stirring such that the pH value of the resulting solution was adjusted to 8.7 ($\pm$0.2). During the reaction, a filtrate only was discharged out of the reaction system using a concentration device, whereas a solid component separated from the filtrate was retained in the reaction vessel. After the reaction was continued for 20 hr, a slurry comprising a co-precipitated product was obtained. The thus obtained slurry was filtered, and the resulting solid was water-washed with sodium hydroxide having a pH value of 10 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Comparative Example 3:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while weakly stirring such that the pH value of the resulting solution was adjusted to 8.8 ($\pm$0.2). During the reaction, a filtrate only was discharged out of the reaction system using a concentration device, whereas a solid component separated from the filtrate was retained in the reaction vessel. After the reaction was continued for 20 hr, a slurry comprising a co-precipitated product was obtained. The thus obtained slurry was filtered, and the resulting solid was water-washed with dilute sulfuric acid having a pH value of 4 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Comparative Example 4:

A sealed type reaction vessel was charged with 14 L of water, and an inside of the reaction vessel was maintained at 40°C while flowing a nitrogen gas therethrough. Further, a 1.5 M Ni sulfate/Mn sulfate mixed aqueous solution, a 0.8 M sodium carbonate aqueous solution, a 2 M ammonia aqueous solution and a sodium hydroxide aqueous solution were successively added into the reaction vessel while weakly stirring such that the pH value of the resulting solution was adjusted to 9.6 ($\pm$0.2). During the reaction, a filtrate only was discharged out of the reaction system using a concentration device, whereas a solid component separated from the filtrate was retained in the reaction vessel. After the reaction was continued for 30 hr, a slurry comprising a co-precipitated product was obtained. The thus obtained slurry was filtered, and the resulting solid was water-washed with dilute sulfuric acid having a pH value of 3, and successively with sodium hydroxide having a pH value of 12 and further with pure water, and then dried at 105°C overnight, thereby obtaining precursor particles.

As a result of subjecting the resulting precursor particles to X-ray diffraction analysis, it was confirmed that the precursor particles comprised a carbonate and a hydroxide as main components.

The results of the other analyses are shown in Table 1.

Comparative Example 5:

A sealed type reaction vessel was charged with 14 L of water, and an inside of the reaction vessel was maintained at 50°C while flowing a nitrogen gas therethrough. Further, a 1.5 M Ni nitrate/Mn nitrate mixed aqueous solution and a slurry of lithium carbonate were successively added into the reaction vessel while strongly stirring such that the pH value of the resulting solution was adjusted to 8.1 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Comparative Example 6:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.

As a result of subjecting the resulting precursor particles to X-ray diffraction analysis, it was confirmed that the precursor particles comprised a carbonate as a main component.

The results of the other analyses are shown in Table 1.

Comparative Example 7:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 5, and successively with sodium hydroxide having a pH value of 9 and further with pure water, and then dried at 105°C overnight, thereby obtaining precursor particles.
As a result of subjecting the resulting precursor particles to X-ray diffraction analysis, it was confirmed that the precursor particles comprised a carbonate as a main component.
The results of the other analyses are shown in Table 1.

Comparative Example 8:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 4.6 and further with pure water, and then dried at 105°C overnight, thereby obtaining precursor particles.
As a result of subjecting the resulting precursor particles to X-ray diffraction analysis, it was confirmed that the precursor particles comprised a carbonate as a main component.
The results of the other analyses are shown in Table 1.

Comparative Example 9:

A sealed type reaction vessel was charged with 14 L of water, and an inside of the reaction vessel was maintained at 50°C while flowing a nitrogen gas therethrough. Further, a 1.5 M Ni sulfate/Mn sulfate mixed aqueous solution, a 0.8 M sodium carbonate aqueous solution and a 2 M ammonia aqueous solution were successively added into the reaction vessel while strongly stirring such that the pH value of the resulting solution was adjusted to 8.2 ($\pm$0.2). During the reaction, a filtrate only was discharged out of the reaction system using a concentration device, whereas a solid component separated from the filtrate was retained in the reaction vessel. After the reaction was continued for 40 hr, a slurry comprising a co-precipitated product was obtained. The thus obtained slurry was filtered, and the resulting solid was water-washed with dilute sulfuric acid having a pH value of 2.6, and successively with sodium hydroxide having a pH value of 11.7 and further with pure water, and then dried at 105°C overnight, thereby obtaining precursor particles.
As a result of subjecting the resulting precursor particles to X-ray diffraction analysis, it was confirmed that the precursor particles comprised a carbonate as a main component.
The results of the other analyses are shown in Table 1.

Example 16:

The precursor particles obtained in Comparative Example 5 were immersed in a sodium sulfate aqueous solution, and then the particles were subjected to evaporation to dryness at 120°C.
As a result of subjecting the resulting precursor particles to X-ray diffraction analysis, it was confirmed that the precursor particles comprised a carbonate as a main component.
The results of the other analyses are shown in Table 1.

Example 17:

The precursor particles obtained in Example 1 and lithium hydroxide were weighed and fully mixed with each other. The resulting mixture was calcined using an electric furnace under an air flow at 850°C for 8 hr, and further successively calcined at 550°C for 4 hr, thereby obtaining positive electrode active substance particles.

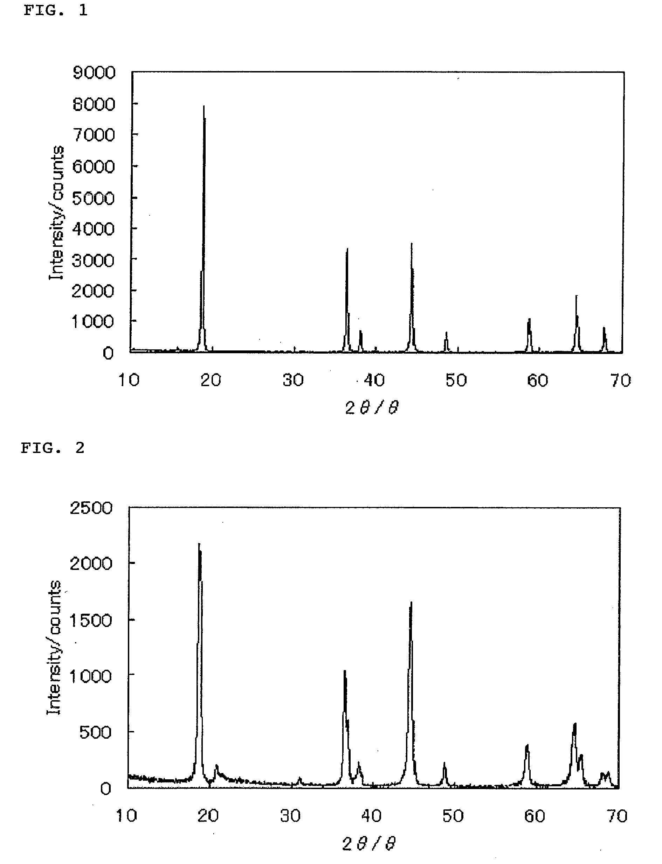

As a result of observation by X-ray diffraction measurement, it was confirmed that the resulting positive electrode active substance particles were in the form of a compound having a spinel type structure, and constituted from a substantially single phase. FIG. 1 shows the X-ray diffraction diagram.

As a result of subjecting the resulting positive electrode active substance particles to ICP analysis, it was confirmed that the molar ratio of Ni: Mn was 24.4:75.6; the ratio of Li/(Ni + Mn) was 0.50; the Ni content was 15.8% by weight; the Na content was 0.7232% by weight; the S content was 0.0298% by weight; and the sum of the Na content and the S content was 0.7530% by weight.

The BET specific surface area of the positive electrode active substance particles as measured by a nitrogen-absorption method was 2.9 $m^2$/g.

As a result of observing the particle size distribution of the above positive electrode active substance particles using "SEISHIN LASER MICRON SIZER LMS-30", it was confirmed that D10% was 11.0 ($\mu$m); D50% was 16.9 ($\mu$m); D90% was 24.8 ($\mu$m); D10%/D50% was 0.65; and D90%/D50% was 1.47.

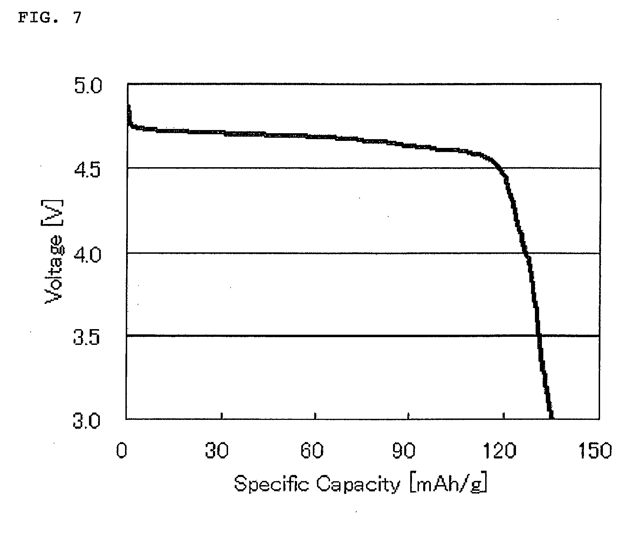

In addition, the coin cell produced by using the positive electrode active substance particles was evaluated for charge/discharge characteristics thereof. As a result, it was confirmed that the discharge capacity of the coin cell at the 10th cycle was 135 mAh/g. FIG. 7 shows the discharge characteristic curve.

The analysis results are shown in Table 2.

Example 18:

The precursor particles obtained in Example 2 and lithium carbonate were weighed and fully mixed with each other. The resulting mixture was calcined using an electric furnace under an oxygen flow at 900°C for 5 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 19:

The precursor particles obtained in Example 3 and lithium carbonate were weighed and fully mixed with each other. The resulting mixture was calcined using an electric furnace under an oxygen flow at 1000°C for 8 hr, and further successively calcined at 650°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

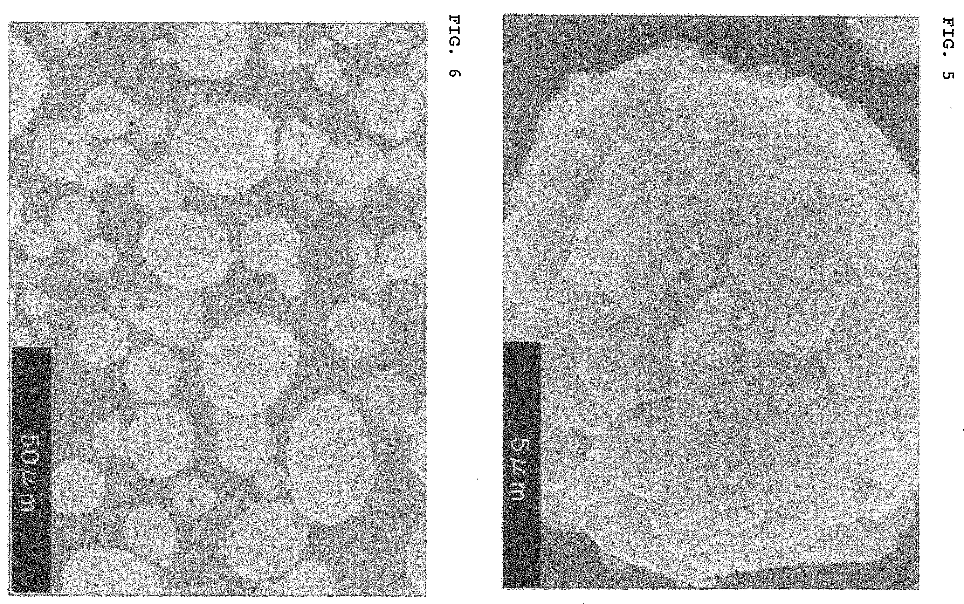

In addition, as a result of observing the above positive electrode active substance particles using a scanning electron microscope (SEM), it was confirmed that most of secondary particles of the positive electrode active substance particles had a substantially spherical shape or a granular shape as shown in FIGS. 5 and 6.

The results of the other analyses are shown in Table 2.

Example 20:

The precursor particles obtained in Example 4 and lithium carbonate were weighed and fully mixed with each other. The resulting mixture was calcined using an electric furnace under an oxygen flow at 1200°C for 3 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 21:

The precursor particles obtained in Example 5 and lithium carbonate were weighed and fully mixed with each other. The resulting mixture was calcined using an electric furnace under an oxygen flow at 750°C for 12 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 22:

The precursor particles obtained in Example 6 and lithium carbonate were weighed and fully mixed with each other. The resulting mixture was calcined using an electric furnace under an oxygen flow at 1250°C for 5 hr, and further successively calcined at 600°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 23:

The precursor particles obtained in Example 7 and lithium hydroxide were weighed and fully mixed with each other. The resulting mixture was calcined using an electric furnace under an oxygen flow at 650°C for 15 hr, and further successively calcined at 700°C for 5 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 24:

The precursor particles obtained in Example 8 and lithium carbonate were weighed and fully mixed with each other. The resulting mixture was calcined using an electric furnace under an oxygen flow at 1300°C for 3 hr, and further successively calcined at 500°C for 20 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 25:

The precursor particles obtained in Example 9 and lithium hydroxide were weighed and fully mixed with each other. The resulting mixture was calcined using an electric furnace under an oxygen flow at 600°C for 20 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 26:

The precursor particles obtained in Example 10, lithium carbonate and aluminum nitrate were weighed and fully mixed with each other. The resulting mixture was calcined using an electric furnace under an air flow at 850°C for 10 hr, and further successively calcined at 550°C for 3 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

As a result of ICP analysis, it was confirmed hat the molar ratio of Ni: Mn: Al was 23.9:75.1:1.0.

The results of the other analyses are shown in Table 2.

Example 27:

The precursor particles obtained in Example 11 and lithium carbonate were weighed and fully mixed with each other. The resulting mixture was calcined using an electric furnace under an oxygen flow at 800°C for 12 hr, and further successively calcined at 550°C for 3 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 28:

The precursor particles obtained in Example 12 and lithium carbonate were weighed and fully mixed with each other. The resulting mixture was calcined using an electric furnace under an oxygen flow at 900°C for 8 hr, and further successively calcined at 550°C for 3 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 29:

The precursor particles obtained in Example 13 and lithium carbonate were weighed and fully mixed with each other. The resulting mixture was calcined using an electric furnace under an oxygen flow at 950°C for 10 hr, and further successively calcined at 600°C for 5 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 30:

The precursor particles obtained in Example 14 and lithium carbonate were weighed and fully mixed with each other. The resulting mixture was calcined using an electric furnace under an oxygen flow at 900°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 31:

The precursor particles obtained in Example 15 and lithium carbonate were weighed and fully mixed with each other. The resulting mixture was calcined using an electric furnace under an air flow at 800°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Example 32:

The precursor particles obtained in Example 16 and lithium carbonate were weighed and fully mixed with each other. The resulting mixture was calcined using an electric furnace under an oxygen flow at 850°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Comparative Example 10:

The precursor particles obtained in Comparative Example 1 and lithium carbonate were weighed and fully mixed with each other. The resulting mixture was calcined using an electric furnace under an oxygen flow at 1150°C for 5 hr, and further successively calcined at 600°C for 3 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Comparative Example 11:

The precursor particles obtained in Comparative Example 2 and lithium carbonate were weighed and fully mixed with each other. The resulting mixture was calcined using an electric furnace under an oxygen flow at 1100°C for 5 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Comparative Example 12:

The precursor particles obtained in Comparative Example 3 and lithium carbonate were weighed and fully mixed with each other. The resulting mixture was calcined using an electric furnace under an oxygen flow at 900°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Comparative Example 13:

The precursor particles obtained in Comparative Example 4 and lithium carbonate were weighed and fully mixed with each other. The resulting mixture was calcined using an electric furnace under an air flow at 850°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Comparative Example 14:

The precursor particles obtained in Comparative Example 5 and lithium hydroxide were weighed and fully mixed with each other. The resulting mixture was calcined using an electric furnace under an oxygen flow at 750°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Comparative Example 15:

The precursor particles obtained in Comparative Example 6 and lithium carbonate were weighed and fully mixed with each other. The resulting mixture was calcined using an electric furnace under an oxygen flow at 800°C for 10 hr, thereby obtaining positive electrode active substance particles.

As a result of observation by X-ray diffraction measurement, it was confirmed that the resulting positive electrode active substance particles were in the form of a compound having a spinel type structure, and constituted from a substantially single phase.

The results of the other analyses are shown in Table 2.

Comparative Example 16:

The precursor particles obtained in Comparative Example 7 and lithium carbonate were weighed and fully mixed with each other. The resulting mixture was calcined using an electric furnace under an oxygen flow at 900°C for 8 hr, thereby obtaining positive electrode active substance particles.
As a result of observation by X-ray diffraction measurement, it was confirmed that the resulting positive electrode active substance particles were constituted from a compound having a spinel type structure and nickel oxide.
The results of the other analyses are shown in Table 2.

Comparative Example 17:

The precursor particles obtained in Example 1 and lithium carbonate were weighed and fully mixed with each other. The resulting mixture was calcined using an electric furnace under an oxygen flow at 750°C for 8 hr, thereby obtaining positive electrode active substance particles.
As a result of observation by X-ray diffraction measurement, it was confirmed that the resulting positive electrode active substance particles were in the form of a compound having a crystal system belonging to an $\alpha$-NaFeO$_2$ type structure. FIG. 2 shows the X-ray diffraction diagram.
The results of the other analyses are shown in Table 2.

Comparative Example 18:

The precursor particles obtained in Comparative Example 8 and lithium hydroxide were weighed and fully mixed with each other. The resulting mixture was calcined using an electric furnace under an air flow at 850°C for 8 hr, and further successively calcined at 550°C for 4 hr, thereby obtaining positive electrode active substance particles.
As a result of observation by X-ray diffraction measurement, it was confirmed that the resulting positive electrode active substance particles were in the form of a compound having a spinel type structure, and constituted from a substantially single phase.
The results of the other analyses are shown in Table 2.

Comparative Example 19:

The precursor particles obtained in Comparative Example 9 and lithium hydroxide were weighed and fully mixed with each other. The resulting mixture was calcined using an electric furnace under an air flow at 850°C for 8 hr, and further successively calcined at 550°C for 4 hr, thereby obtaining positive electrode active substance particles.
As a result of observation by X-ray diffraction measurement, it was confirmed that the resulting positive electrode active substance particles were in the form of a compound having a spinel type structure, and constituted from a substantially single phase.
The results of the other analyses are shown in Table 2.
Various properties of the precursor particles obtained in Examples 1 to 16 and Comparative Examples 1 to 9 are shown in Table 1.

Table 1

| Examples and Comparative Examples | Na content (wt%) | S content (wt%) | Na+S content (wt%) |
|---|---|---|---|
| Example 1 | 0.5113 | 0.0211 | 0.5324 |
| Example 2 | 0.5562 | 0.0427 | 0.5989 |
| Example 3 | 0.3210 | 0.0007 | 0.3217 |
| Example 4 | 0.2348 | 0.0072 | 0.2420 |
| Example 5 | 0.6635 | 0.0844 | 0.7479 |
| Example 6 | 0.1584 | 0.0039 | 0.1623 |
| Example 7 | 0.7342 | 0.1021 | 0.8363 |
| Example 8 | 0.0769 | 0.0014 | 0.0783 |
| Example 9 | 1.3149 | 0.1120 | 1.4269 |
| Example 10 | 0.5434 | 0.0236 | 0.5670 |

(continued)

| Examples and Comparative Examples | Na content (wt%) | S content (wt%) | Na+S content (wt%) |
|---|---|---|---|
| Example 11 | 0.5386 | 0.0215 | 0.5601 |
| Example 12 | 0.5875 | 0.0343 | 0.6218 |
| Example 13 | 0.5142 | 0.0229 | 0.5371 |
| Example 14 | 0.5291 | 0.0230 | 0.5521 |
| Example 15 | 0.5132 | 0.0241 | 0.5373. |
| Example 16 | 0.1305 | 0.0889 | 0.2194 |
| Comp. Example 1 | 1.6957 | 0.3310 | 2.0267 |
| Comp. Example 2 | 1.7452 | 0.0015 | 1.7467 |
| Comp. Example 3 | 0.0149 | 0.1175 | 0.1324 |
| Comp. Example 4 | 0.0171 | 0.0004 | 0.0175 |
| Comp. Example 5 | 0.0057 | 0.0000 | 0.0057 |
| Comp. Example 6 | 0.5219 | 0.0237 | 0.5456 |
| Comp. Example 7 | 0.5135 | 0.0221 | 0.5356 |
| Comp. Example 8 | 0.4164 | 0.2547 | 0.6711 |
| Comp. Example 9 | 0.0521 | 0.0002 | 0.0523 |

| Examples and Comparative Examples | Ni content (wet%) | Particle size distribution | |
|---|---|---|---|
| | | D10% ($\mu$m) | D50% ($\mu$m) |
| Example 1 | 12.2 | 11.0 | 16.8 |
| Example 2 | 11.7 | 3.3 | 5.6 |
| Example 3 | 13.4 | 13.1 | 19.2 |
| Example 4 | 9.3 | 1.8 | 3.9 |
| Example 5 | 14.3 | 15.2 | 21.1 |
| Example 6 | 8.4 | 0.5 | 1.8 |
| Example 7 | 15.0 | 24.5 | 28.4 |
| Example 8 | 5.1 | 3.1 | 5.6 |
| Example 9 | 16.9 | 36.2 | 41.1 |
| Example 10 | 12.0 | 9.5 | 15.1 |
| Example 11 | 11.9 | 8.7 | 14.4 |
| Example 12 | 9.3 | 7.2 | 12.9 |
| Example 13 | 12.1 | 2.7 | 4.8 |
| Example 14 | 12.1 | 1.3 | 10.5 |
| Example 15 | 12.1 | 0.7 | 4.1 |
| Example 16 | 12.3 | 11.2 | 16.7 |
| Comp. Example 1 | 11.5 | 11.9 | 17.5 |
| Comp. Example 2 | 11.6 | 3.5 | 5.9 |
| Comp. Example 3 | 12.0 | 2.1 | 10.9 |
| Comp. Example 4 | 12.3 | 1.2 | 7.9 |
| Comp. Example 5 | 12.4 | 11.3 | 16.7 |

(continued)

| Examples and Comparative Examples | Ni content (wet%) | Particle size distribution | |
|---|---|---|---|
| | | D10% ($\mu$m) | D50% ($\mu$m) |
| Comp. Example 6 | 2.5 | 11.2 | 17.3 |
| Comp. Example 7 | 24.8 | 13.7 | 19.1 |
| Comp. Example 8 | 12.2 | 11.1 | 16.7 |
| Comp. Example 9 | 12.2 | 10.7 | 16.0 |
| Examples and Comparative Examples | Particle size distribution | | |
| | D90% ($\mu$m) | D10%/D50% | D90%/D50% |
| Example 1 | 24.8 | 0.65 | 1.48 |
| Example 2 | 9.4 | 0.59 | 1.68 |
| Example 3 | 29.2 | 0.68 | 1.52 |
| Example 4 | 7.5 | 0.46 | 1.92 |
| Example 5 | 29.2 | 0.72 | 1.38 |
| Example 6 | 4.4 | 0.28 | 2.44 |
| Example 7 | 36.0 | 0.86 | 1.27 |
| Example 8 | 9.1 | 0.56 | 1.64 |
| Example 9 | 51.4 | 0.88 | 1.25 |
| Example 10 | 23.9 | 0.63 | 1.58 |
| Example 11 | 22.6 | 0.60 | 1.57 |
| Example 12 | 21.0 | 0.56 | 1.63 |
| Example 13 | 8.1 | 0.56 | 1.69 |
| Example 14 | 28.7 | 0.12 | 2.73 |
| Example 15 | 11.2 | 0.17 | 2.73 |
| Example 16 | 24.3 | 0.67 | 1.46 |
| Comp. Example 1 | 25.1 | 0.68 | 1.43 |
| Comp. Example 2 | 10.1 | 0.59 | 1.71 |
| Comp. Example 3 | 28.6 | 0.19 | 2.62 |
| Comp. Example 4 | 21.6 | 0.15 | 2.73 |
| Comp. Example 5 | 24.2 | 0.68 | 1.45 |
| Comp. Example 6 | 27.0 | 0.65 | 1.56 |
| Comp. Example 7 | 29.5 | 0.72 | 1.54 |
| Comp. Example 8 | 25.2 | 0.66 | 1.51 |
| Comp. Example 9 | 24.9 | 0.67 | 1.56 |

Various properties of the positive electrode active substance particles obtained in Examples 17 to 32 and Comparative Examples 10 to 19 are shown in Table 2.

Table 2

| Examples and Comparative Examples | Na content (wt%) | S content (wt%) | Na+S content (wt%) |
|---|---|---|---|
| Example 17 | 0.7232 | 0.0298 | 0.7530 |
| Example 18 | 0.7906 | 0.0604 | 0.8510 |
| Example 19 | 0.4579 | 0.0010 | 0.4589 |
| Example 20 | 0.3360 | 0.0102 | 0.3462 |
| Example 21 | 0.9424 | 0.1194 | 1.0618 |
| Example 22 | 0.2279 | 0.0055 | 0.2335 |
| Example 23 | 1.0424 | 0.1397 | 1.1821 |
| Example 24 | 0.1127 | 0.0020 | 0.1146 |
| Example 25 | 1.7237 | 0.1584 | 1.8822 |
| Example 26 | 0.7725 | 0.0334 | 0.8059 |
| Example 27 | 0.7657 | 0.0304 | 0.7961 |
| Example 28 | 0.8049 | 0.0485 | 0.8534 |
| Example 29 | 0.7312 | 0.0324 | 0.7636 |
| Example 30 | 0.7523 | 0.0325 | 0.7848 |
| Example 31 | 0.7298 | 0.0341 | 0.7639 |
| Example 32 | 0.1865 | 0.1257 | 0.3122 |
| Comp. Example 10 | 2.4023 | 0.4682 | 2.8705 |
| Comp. Example 11 | 2.4724 | 0.0020 | 2.4744 |
| Comp. Example 12 | 0.0250 | 0.1574 | 0.1824 |
| Comp. Example 13 | 0.0281 | 0.0004 | 0.0285 |
| Comp. Example 14 | 0.0081 | 0.0000 | 0.0081 |
| Comp. Example 15 | 0.7421 | 0.0335 | 0.7756 |
| Comp. Example 16 | 0.7302 | 0.0313 | 0.7615 |
| Comp. Example 17 | 0.7296 | 0.0289 | 0.7585 |
| Comp. Example 18 | 0.5890 | 0.3603 | 0.9492 |
| Comp. Example 19 | 0.0737 | 0.0003 | 0.0740 |
| Examples and Comparative Examples | Ni content (wt%) | Li(Ni+Mn) (mol/mol) | BET specific surface area ($m^2$/g) |
| Example 17 | 15.8 | 0.50 | 2.9 |
| Example 18 | 15.2 | 0.48 | 2.1 |
| Example 19 | 17.3 | 0.49 | 0.6 |
| Example 20 | 12.1 | 0.42 | 0.3 |
| Example 21 | 18.5 | 0.51 | 8.2 |
| Example 22 | 10.9 | 0.35 | 0.2 |
| Example 23 | 19.4 | 0.54 | 12.7 |
| Example 24 | 6.6 | 0.32 | 0.1 |
| Example 25 | 22.9 | 0.61 | 18.3 |

(continued)

| Examples and Comparative Examples | Ni content (wt%) | Li(Ni+Mn) (mol/mol) | BET specific surface area (m$^2$/g) |
|---|---|---|---|
| Example 26 | 15.5 | 0.50 | 2.6 |
| Example 27 | 15.4 | 0.49 | 2.2 |
| Example 28 | 12.1 | 0.51 | 1.9 |
| Example 29 | 15.7 | 0.51 | 1.1 |
| Example 30 | 15.7 | 0.50 | 1.5 |
| Example 31 | 15.6 | 0.52 | 0.9 |
| Example 32 | 15.9 | 0.50 | 2 |
| Comp. Example 10 | 14.9 | 0.49 | 0.2 |
| Comp. Example 11 | 15.0 | 0.51 | 0.3 |
| Comp. Example 12 | 15.5 | 0.50 | 1.8 |
| Comp. Example 13 | 15.9 | 0.51 | 2.9 |
| Comp. Example 14 | 16.0 | 0.51 | 3.8 |
| Comp. Example 15 | 3.2 | 0.50 | 3 |
| Comp. Example 16 | 32.1 | 0.48 | 2.1 |
| Comp. Example 17 | 13.9 | 0.99 | 9.3 |
| Comp. Example 18 | 15.8 | 0.50 | 3.9 |
| Comp. Example 19 | 15.8 | 0.50 | 4.5 |

| Examples and Comparative Examples | Particle size distribution | | |
|---|---|---|---|
| | D10% ($\mu$m) | D50% ($\mu$m) | D90% ($\mu$m) |
| Example 17 | 11.0 | 16.9 | 24.8 |
| Example 18 | 3.5 | 5.7 | 9.7 |
| Example 19 | 13.1 | 19.2 | 29.2 |
| Example 20 | 2.2 | 5.1 | 9.0 |
| Example 21 | 15.2 | 21.0 | 29.1 |
| Example 22 | 0.6 | 1.9 | 4.6 |
| Example 23 | 24.5 | 28.4 | 36.0 |
| Example 24 | 3.7 | 9.5 | 22.5 |
| Example 25 | 36.1 | 41.0 | 51.6 |
| Example 26 | 9.4 | 15.2 | 23.7 |
| Example 27 | 8.7 | 14.3 | 22.5 |
| Example 28 | 7.2 | 12.9 | 21.0 |
| Example 29 | 2.9 | 5.0 | 8.4 |
| Example 30 | 1.2 | 10.4 | 28.6 |
| Example 31 | 0.8 | 4.6 | 12.3 |
| Example 32 | 11.2 | 16.8 | 24.3 |
| Comp. Example 10 | 12.2 | 17.9 | 26.1 |
| Comp. Example 11 | 3.7 | 6.0 | 10.8 |

(continued)

| Examples and Comparative Examples | Particle size distribution | | |
|---|---|---|---|
| | D10% ($\mu$m) | D50% ($\mu$m) | D90% ($\mu$m) |
| Comp. Example 12 | 2.2 | 10.9 | 28.7 |
| Comp. Example 13 | 1.2 | 7.8 | 21.6 |
| Comp. Example 14 | 11.2 | 16.7 | 24.2 |
| Comp. Example 15 | 11.2 | 17.1 | 26.5 |
| Comp. Example 16 | 13.9 | 19.2 | 29.8 |
| Comp. Example 17 | 10.5 | 17.8 | 25.9 |
| Comp. Example 18 | 10.9 | 16.6 | 24.7 |
| Comp. Example 19 | 11.1 | 16.7 | 24.6 |
| Examples and Comparative Examples | Particle size distribution | | Battery characteristics |
| | D10%/D50% | D90%/D50% | Discharge capacity at 10th cycle (mAh/g) |
| Example 17 | 0.65 | 1.47 | 135 |
| Example 18 | 0.61 | 1.70 | 136 |
| Example 19 | 0.68 | 1.52 | 135 |
| Example 20 | 0.43 | 1.76 | 131 |
| Example 21 | 0.72 | 1.39 | 131 |
| Example 22 | 0.32 | 2.42 | 128 |
| Example 23 | 0.86 | 1.27 | 127 |
| Example 24 | 0.39 | 2.37 | 124 |
| Example 25 | 0.88 | 1.26 | 125 |
| Example 26 | 0.62 | 1.56 | 135 |
| Example 27 | 0.61 | 1.57 | 136 |
| Example 28 | 0.56 | 1.63 | 135 |
| Example 29 | 0.58 | 1.68 | 120 |
| Example 30 | 0.12 | 2.75 | 119 |
| Example 31 | 0.17 | 2.67 | 116 |
| Example 32 | 0.67 | 1.45 | 134 |
| Comp. Example 10 | 0.68 | 1.46 | 94 |
| Comp. Example 11 | 0.62 | 1.80 | 95 |
| Comp. Example 12 | 0.20 | 2.63 | 94 |
| Comp. Example 13 | 0.15 | 2.77 | 106 |
| Comp. Example 14 | 0.67 | 1.45 | 108 |
| Comp. Example 15 | 0.65 | 1.55 | 110 |
| Comp. Example 16 | 0.72 | 1.55 | 99 |
| Comp. Example 17 | 0.59 | 1.46 | 103 |
| Comp. Example 18 | 0.66 | 1.49 | 109 |
| Comp. Example 19 | 0.66 | 1.47 | 97 |

The positive electrode active substance particles obtained in Examples 17 to 32 all exhibited a discharge capacity of not less than 115 mAh/g as measured at the 10th cycle. Thus, the positive electrode active substance particles according to the present invention had a spinel type structure and were in the form of a positive electrode material having an excellent large discharge capacity owing to Na and S added thereto.

As a result, it was confirmed that the positive electrode active substance particles according to the present invention had an excellent large charge/discharge capacity and therefore were effective as a positive electrode active substance for non-aqueous electrolyte secondary batteries.

INDUSTRIAL APPLICABILITY

The positive electrode active substance particles according to the present invention are largely improved in discharge capacity thereof and therefore can be suitably used as a positive electrode active substance particles for non-aqueous electrolyte secondary batteries.

**Claims**

1. Positive electrode active substance particles comprising a compound having a spinel type structure comprising at least Li, Ni and Mn, and wherein a molar ratio of Li/(Ni + Mn) therein is 0.3 to 0.65, the Ni content is 5 to 25% by weight, the Na content is 0.05 to 1.9% by weight and the S content is 0.0005 to 0.16% by weight, and the sum of the Na content and the S content is 0.09 to 1.9005% by weight.

2. Positive electrode active substance particles according to claim 1, wherein the compound having a spinel type structure is represented by the formula: $LiNi_xMn_{2-x}O_4$ wherein x is in the range of 0.2 to 0.92 ($0.2 \leq x\ 0.92$).

3. Positive electrode active substance particles according to claim 1 or 2, wherein the positive electrode active substance particles have a specific surface area of 0.05 to 20 $m^2/g$ as measured by a BET method.

4. Positive electrode active substance particles according to any one of claims 1 to 3, wherein the positive electrode active substance particles comprise secondary particles in the form of aggregated primary particles which have an average secondary particle diameter of 1 to 50 $\mu$m.

5. Positive electrode active substance particles according to any one of claims 1 to 4, wherein the particle size distribution of the secondary particles is such that D10%/D50% is 0.1 to 1.0 and D90%/D50% is 1.0 to 2.8.

6. Positive electrode active substance particles according to any one of claims 1 to 5, wherein the average primary particle diameter of the positive electrode acid substance particles is not more than 10 $\mu$m.

7. Precursor particles comprising, as a main component, a composite carbonate comprising at least Ni and Mn and having an Ni content of 3 to 18% by weight, an Na content of 0.05 to 1.5% by weight and an S content of 0.0005 to 0.12% by weight, a sum of the Na content and the S content being 0.07 to 1.6% by weight.

8. Precursor particles according to claim 7, wherein the composite carbonate is represented by the formula: $Ni_xMn_{1-x}CO_3$ wherein x is in the range of 0.1 to 0.46 ($0.1 \leq x \leq 0.46$).

9. Precursor particles according to either claim 7 or claim 8, wherein the particle size distribution of the secondary particles of the precursor particles is such that D10%/D50% is 0.1 to 1.0 and D90%/D50% is 1.0 to 2.8.

10. Precursor particles according to any one of claims 7 to 9, wherein the average particle diameter of the particles is 1 to 50 $\mu$m and wherein the particles have a BET specific surface area of 3 to 150 $m^2/g$.

11. Positive electrode active substance particles according to any one of claims 1 to 6 which are obtainable by mixing precursor particles according to any one of claims 7 to 10 with a lithium compound, and then calcining the resulting mixture in a temperature range of 500 to 1300°C.

12. A positive electrode which comprises positive electrode active substance particles according to any one of claims 1 to 6 or 11, a conducting agent and a binder.

13. A non-aqueous electrolyte secondary battery comprising a positive electrode comprising the positive electrode active substance particles as defined in any one of claims 1 to 6 or 11.

14. Use of the positive electrode active substance particles according to any one of claims 1 to 6 or 11 in a non-aqueous electrolyte secondary battery.

**Patentansprüche**

1. Aktivsubstanzteilchen für positive Elektrode, umfassend eine Verbindung mit einer Struktur vom Spinell-Typ, umfassend zumindest Li, Ni und Mn und worin ein molares Verhältnis von Li/(Ni + Mn) darin 0,3 bis 0,65 ist, der Ni-Gehalt von 5 bis 25 Gew.% ist, der Na-Gehalt 0,05 bis 1,9 Gew.% ist und der S-Gehalt 0,0005 bis 0,16 Gew.% ist und die Summe des Na-Gehaltes und des S-Gehaltes 0,09 bis 1,9005 Gew.% ist.

2. Aktivsubstanzteilchen für positive Elektrode gemäß Anspruch 1, worin die Verbindung mit einer Struktur vom Spinell-Typ dargestellt ist durch die Formel:

$$LiNi_xMn_{2-x}O_4,$$

worin x im Bereich von 0,2 bis 0,92 ($0,2 \leq x \leq 0,92$) ist.

3. Aktivsubstanzteilchen für positive Elektrode gemäß Anspruch 1 oder 2, worin die Aktivsubstanzteilchen für positive Elektrode eine spezifische Oberfläche von 0,05 bis 20 $m^2/g$, gemessen durch das BET-Verfahren, haben.

4. Aktivsubstanzteilchen für positive Elektrode gemäß einem der Ansprüche 1 bis 3, worin die Aktivsubstanzteilchen für die positive Elektrode Sekundärteilchen in der Form von aggregierten Primärteilchen mit einem durchschnittlichen Sekundärteilchendurchmesser von 1 bis 50 $\mu$m enthalten.

5. Aktivsubstanzteilchen für positive Elektrode gemäß einem der Ansprüche 1 bis 4, worin die Teilchengrößenverteilung der Sekundärteilchen so ist,
dass D10%/D50% 0,1 bis 1,0 und D90%/D50% 1,0 bis 2,8 ist.

6. Aktivsubstanzteilchen für positive Elektrode gemäß einem der Ansprüche 1 bis 5, worin der durchschnittliche Primärteilchendurchmesser der Aktivsubstanzteilchen für die positive Elektrode nicht mehr als 10 $\mu$m ist.

7. Vorläuferteilchen, umfassend als Hauptkomponente ein Verbundcarbonat, umfassend zumindest Ni und Mn und mit einem Ni-Gehalt von 3 bis 18 Gew.%, einem Na-Gehalt von 0,05 bis 1,5 Gew.% und einem S-Gehalt von 0,0005 bis 0,12 Gew.%, wobei eine Summe des Na-Gehaltes und des S-Gehaltes 0,07 bis 1,6 Gew.% ist.

8. Vorläuferteilchen gemäß Anspruch 7, worin das Verbundcarbonat durch die Formel dargestellt ist:

$$Ni_xMn_{1-x}CO_3,$$

worin x im Bereich von 0,1 bis 0,46 ist ($0,1 \leq x \leq 0,46$).

9. Vorläuferteilchen gemäß Anspruch 7 oder 8, worin die Teilchengrößenverteilung der Sekundärteilchen der Vorläuferteilchen so ist, dass D10%/D50% 0,1 bis 1,0 und D90%/D50% 1,0 bis 2,8 ist.

10. Vorläuferteilchen gemäß einem der Ansprüche 7 bis 9, worin der durchschnittliche Teilchendurchmesser der Teilchen 1 bis 50 $\mu$m ist und die Teilchen eine spezifische BET-Oberfläche von 3 bis 150 $m^2/g$ haben.

11. Aktivsubstanzteilchen für positive Elektrode gemäß einem der Ansprüche 1 bis 6, die erhältlich sind durch Mischen von Vorläuferteilchen gemäß einem der Ansprüche 7 bis 10 mit einer Lithiumverbindung und anschließendes Kalzinieren der resultierenden Mischung in einem Temperaturbereich von 500 bis 1.300°C.

12. Positive Elektrode, umfassend die Aktivsubstanzteilchen für die positive Elektrode gemäß einem der Ansprüche 1 bis 6 oder 11, ein leitendes Mittel und ein Bindemittel.

**13.** Nicht-wässrige Elektrolyt-Sekundärbatterie, umfassend eine positive Elektrode, umfassend die Aktivsubstanzteilchen für die positive Elektrode wie in einem der Ansprüche 1 bis 6 oder 11 definiert.

**14.** Verwendung der Aktivsubstanzteilchen für die positive Elektrode gemäß einem der Ansprüche 1 bis 6 oder 11 in einer nicht-wässrigen Elektrolyt-Sekundärbatterie.

**Revendications**

**1.** Particules de matière active d'électrode positive, comprenant un composé ayant une structure de type spinelle comprenant au moins Li, Ni et Mn, et dans lesquelles un rapport en moles Li/(Ni + Mn) y est de 0,3 à 0,65, la teneur en Ni est de 5 à 25 % en poids, la teneur en Na est de 0,05 à 1,9 % en poids et la teneur en S est de 0,0005 à 0,16 % en poids, et la somme de la teneur en Na et de la teneur en S est de 0,09 à 1,9005 % en poids.

**2.** Particules de matière active d'électrode positive selon la revendication 1, dans lesquelles le composé ayant un structure de type spinelle est représenté par la formule $LiNi_xMn_{2-x}O_4$, dans laquelle x est compris dans la plage de 0,2 à 0,92 ($0,2 \leq x \leq 0,92$).

**3.** Particules de matière active d'électrode positive selon la revendication 1 ou 2, dans lesquelles les particules de matière active d'électrode positive ont une aire spécifique de 0,05 à 20 $m^2$/g, telle que mesurée par une méthode BET.

**4.** Particules de matière active d'électrode positive selon l'une quelconque des revendications 1 à 3, dans lesquelles les particules de matière active d'électrode positive comprennent des particules secondaires sous forme de particules primaires agrégées qui ont une granulométrie secondaire moyenne de 1 à 50 $\mu$m.

**5.** Particules de matière active d'électrode positive selon l'une quelconque des revendications 1 à 4, dans lesquelles la distribution granulométrique des particules secondaires est telle que D10 %/D50 % soit de 0,1 à 1,0 et que D90 %/D50 % soit de 1,0 à 2,8.

**6.** Particules de matière active d'électrode positive selon l'une quelconque des revendications 1 à 5, dans lesquelles la granulométrie primaire moyenne des particules de matière acide d'électrode positive n'est pas supérieure à 10 $\mu$m.

**7.** Particules précurseurs comprenant en tant que composant principal un carbonate composite comprenant au moins Ni et Mn et ayant une teneur en Ni de 3 à 18 % en poids, une teneur en Na de 0,05 à 1,5 % en poids et une teneur en S de 0,0005 à 0,12 % en poids, une somme de la teneur en Na et de la teneur en S étant de 0,07 à 1,6 % en poids.

**8.** Particules précurseurs selon la revendication 7, dans lesquelles le carbonate composite est représenté par la formule $Ni_xMn_{1-x}CO_3$, dans laquelle x est compris dans la plage de 0,1 à 0,46 ($0,1 \leq x \leq 0,46$).

**9.** Particules précurseurs selon l'une ou l'autre des revendications 7 ou 8, dans lesquelles la distribution granulométrique des particules secondaires des particules précurseurs est telle que D10 %/D50 % soit de 0,1 à 1,0 et que D90 %/D50 % soit de 1,0 à 2,8.

**10.** Particules précurseurs selon l'une quelconque des revendications 7 à 9, dans lesquelles la granulométrie moyenne des particules est de 1 à 50 $\mu$m, et dans lesquelles les particules ont une aire spécifique BET de 3 à 150 $m^2$/g.

**11.** Particules de matière active d'électrode positive selon l'une quelconque des revendications 1 à 6, qui peuvent être obtenues par mélange des particules précurseurs selon l'une quelconque des revendications 7 à 10 avec un composé du lithium, puis calcination du mélange obtenu, sur une plage de températures de 500 à 1 300°C.

**12.** Electrode positive, qui comprend des particules de matière active d'électrode positive selon l'une quelconque des revendications 1 à 6 ou 11, un agent conducteur et un liant.

**13.** Batterie secondaire à électrolyte non aqueux, comprenant une électrode positive comprenant les particules de matière active d'électrode positive telles que définies dans l'une quelconque des revendications 1 à 6 ou 11.

**14.** Utilisation des particules de matière active d'électrode positive selon l'une quelconque des revendications 1 à 6 ou 11 dans une batterie secondaire à électrolyte non aqueux.

FIG. 1

FIG. 2

FIG. 3

FIG. 4

FIG. 5

5 μm

FIG. 6

50 μm

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004064180 A1
- JP 9147867 A
- JP 2005322480 A
- JP 2001185148 A